(19) Europäisches Patentamt
European Patent Office
Office européen des brevets

(11) Publication number : **0 493 209 A1**

(12) **EUROPEAN PATENT APPLICATION**

(21) Application number : **91403457.4**

(51) Int. Cl.[5] : **C07F 7/08,** A61K 31/695

(22) Date of filing : **19.12.91**

(30) Priority : **27.12.90 EP 90403794**

(43) Date of publication of application : **01.07.92 Bulletin 92/27**

(84) Designated Contracting States : **FR**

(71) Applicant : **MERRELL DOW PHARMACEUTICALS INC.**
**2110 East Galbraith Road**
**Cincinnati Ohio 45215-6300 (US)**

(72) Inventor : **Collard, Jean-Noel**
**11 rue des Cygnes**
**F-67800 Hoenheim (FR)**
Inventor : **Hornsperger, Jean-Marie, Cité Bellevue**
**Rue des Vergers, Griesheim près Molsheim**
**F-67210 Obernai (FR)**

(74) Representative : **Gillard, Marie-Louise et al**
**Cabinet Beau de Loménie 55, Rue d'Amsterdam**
**F-75008 Paris (FR)**

(54) **Fluoroketone derivatives of silylated pyridines.**

(57) This invention relates to fluoroketone derivatives of silylated pyridines, to the intermediates and processes for their preparation and to their use in treating diseases associated with deficiencies of cholinergic transmission in the central nervous system.

EP 0 493 209 A1

This invention relates to fluoroketone derivatives of silylated pyridines, to the intermediates and processes for their preparation and to their use in treating diseases associated with deficiencies of cholinergic transmission in the central nervous system.

More specifically, this invention relates to fluoroketone derivatives of silylated pyridines possessing acetylcholinesterase inhibiting properties and to their use in treating Alzheimer's disease and senile dementia. Still more specifically, this invention relates to 2Z,4Y- or 3Z,5Y- substituted pyridine of the formula

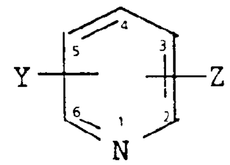

I

and the pharmaceutically acceptable salts thereof, wherein
Y is

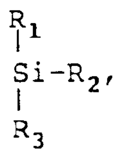

Z is

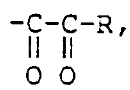

$-QCF_2X'$ or $-QCF_2X''$,
Q is

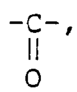 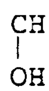 or 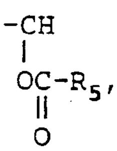

X′ is H, F, Br, Cl, $CF_3$ or $R_4$,
R is $R_5$ , $OR_5$, or OR′ with R′ being $CF_3$ or $CF_2CF_3$,
X″ is

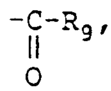 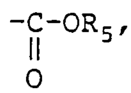 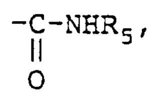 or 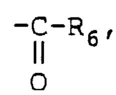

and each of $R_1$, $R_2$, $R_3$ and $R_4$ are $C_{1-10}$ alkyl, phenyl, benzyl or phenethyl,
$R_5$ is H, $C_{1-10}$ alkyl, phenyl, benzyl or phenethyl,
$R_6$ is

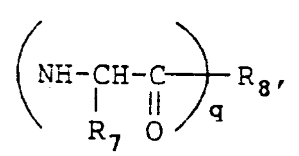

q is 1 to 4,
$R_7$ is the residue of any natural occurring α-amino acid,
$R_8$ is $OR_5$ or $NHR_5$,
$R_9$ is $C_{1-10}$ alkyl, phenyl, benzyl or phenethyl.

The 2Z,4Y and 3Z,5Y-substituted pyridines of Formula I May also be depicted as compounds of the formulae

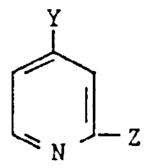 and 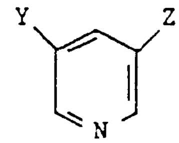

respectively.

As used herein the term "alkyl" includes the straight, branched-chain and cyclized saturated hydrocarbyl moieties having up to 10 carbon atoms, particularly including such moieties as methyl, ethyl, n-butyl, t-butyl, cyclopropyl, n-propyl, pentyl, hexyl, n-nonyl, decyl, cyclopentyl, cyclohexyl and cyclohexylmethylene. The term "aryl" within the definitions for $R_1$, $R_2$, $R_3$ and $R_4$ includes both carbocyclic and heterocyclic moieties of which phenyl, pyridyl, indolyl, indazolyl, furyl and thienyl are of primary interest; these moieties being inclusive of their position isomers such as, for example, 2-, 3-, or 4-pyridyl, 2- or 3-furyl and thienyl, 1-, 2-, or 3-indolyl or the 1- and 3-indazolyl, as well as the dihydro and tetrahydro analogs of the furyl and thienyl moieties.

The term $[NHCHR_7C(O)]_q$ of $R_8$ represents an α-amino acid or a peptide of up to 4 amino acids, with $R_7$ being the residue of any of the naturally occurring α-amino acids (including proline in its natural form) including alanine, arginine, asparagine, aspartic acid, cysteine, glutamine, glutamic acid, glycine, histidine, isoleucine, leucine, lysine, methionine, phenylalanine, serine, threonine, tryptophan, tyrosine, valine, nor-valine, n-leucine, 1-naphthylalanine, 2-indolinecarboxylic acid and sarcosin. Of course when q is other than I the residue of the α-amino acid moieties may be the same or different. Preferably $R_8$ represents either OH or $NH_2$ and the $R_8$ variants thereof, particularly when $R_5$ is methyl or ethyl.

The pharmaceutically acceptable salts of the compounds of Formula Iinclude salts formed with non-toxic organic or inorganic acids such as, for example, from the following acids: hydrochloric, hydrobromic, sulfonic, sulfuric, phosphoric, nitric, maleic, fumaric, benzoic, ascorbic, pamoic, succinic, methanesulfonic, acetic, propionic, tartaric, citric, lactic, malic, mandelic, cinnamic, palmitic, itaconic and benzenesulfonic.

For convenience, particularly when used in a sentence structure or within a reaction scheme, the moieties

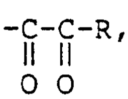 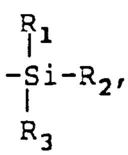 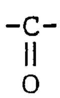 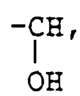 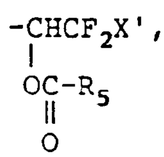 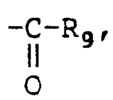 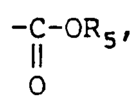 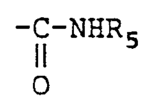

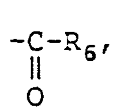 and 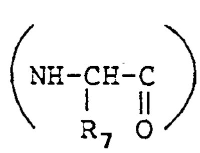

will sometimes be written as -C(O)C(O)R, $-SiR_1R_2R_3$, -C(O), CH(OH),

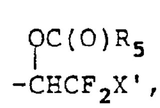

$-C(O)R_9$, $CO_2R_5$, $CONHR_5$, $C(O)R_6$ and $(NHCHR_7C(O))$, respectively; the C(O) representing a carbonyl moiety.

The preparation of the compounds of Formula I may be effected by a variety of processes, the choice generally being dependent upon the specific combination of the substituents for any sub-generic group or specific

compounds embraced within the scope of formula I. In any event, the chemical reactions and procedures are analogously known in the art and the selection of any particular route to prepare any particular compound is governed by principles well known and appreciated by those of ordinary skill in the art. Thus, by the application of the below-described procedures and chemical processes generally well-known in the art, the compounds of this invention may be prepared.

To prepare 3Z,5Y-substituted compounds of the sub-generic formula

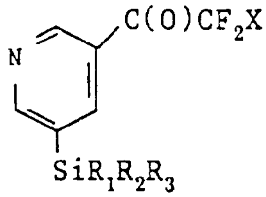

A-10

i.e., those 3Z,5Y-substituted pyridines wherein Q is -C(O) and X',$R_1$, $R_2$ and $R_3$ are as defined in formula I, the processes of the following reaction scheme may be utilized.

Reaction Scheme A

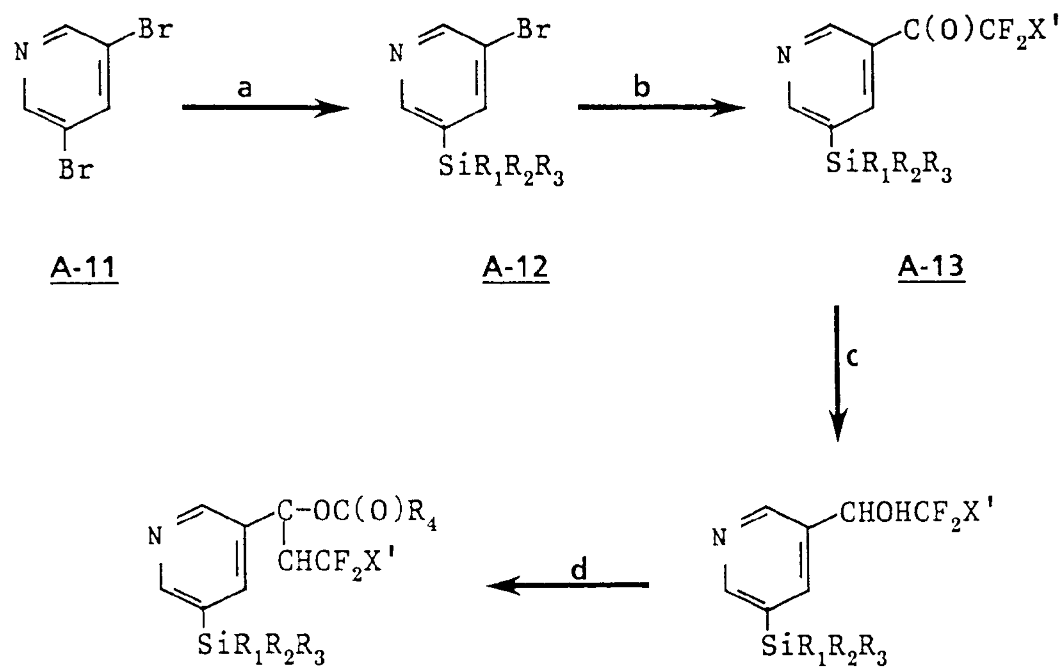


A-11 A-12 A-13

A-15 A-14

In the initial step (A-a) the reaction involves the treatment of the dibromo compounds (A-11) with $ClSiR_1R_2R_3$ in the presence of one equivalent of magnesium in a suitable solvent such as diethylether or tetrahydrofuran, said reaction taking place at about the reflux temperature of the mixture to obtain the silylated derivatives (A-12) which, by Step (A-b), are converted to their intermediate lithio derivatives by reaction with an alkyllithium at 0°C in diethyl ether or tetrahydrofuran and those intermediates are converted to the desired products (A-13) by reaction with three equivalents of the appropriate acid (preferably as its lithium salt), or ester ($X'CF_2CO_2R'$) acid chloride ($X'CF_2COCl$) with R′ being $C_{1-6}$ alkyl, preferably methyl or ethyl . The ketones may be reduced with sodium borohydride or sodium cyano borohydride by reaction in ethanol followed by hydrolysis with saturated ammonium chloride and the resulting alcohols (A-14) esterified with an acyl halide (ClC(O)R″

with R″ being H or $C_{1-10}$ alkyl), in the presence of TEA (or neat pyridine) in a suitable solvent such as dichloromethane to produce compounds A-15; both these reactions being effected according to well known and understood reaction conditions.

In the instance wherein X′ is $CF_3$, an alternative procedure may conveniently be used wherein a 3-carboxyl-5-$SiR_1R_2R_3$ substituted pyridine is converted to its hydroxamic derivative and then converted to its pentafluoroethyl derivative. The alternate process is initiaied by anionizing the starting material with a base, preferably N-methyl morpholine, triethylamine, diisopropylethylamine or other suitable amines. Preferably the anion is formed using excess quantities of the amine, stirring the mixture at about -15°C to 10°C, preferably 0°C. Addition of an equivalent amount of isobutylchloroformate with cooling at about -20°C forms an *in situ* mixed anhydride. (Other equivalently functioning peptide coupling agents, such as diethylcyanophosphonate, DCC, BOP reagents, BOP chloride, may be used in place of isobutylchloroformate.) Addition of molar equivalent amounts of N,O-dimethylhydroxylamine to the activated intermediate yields a dimethylhydroxamic acid derivative (i.e., an N-methyl-N-methoxy amide). Both are conducted under an inert atmosphere (argon and nitrogen) under anhydrous conditions.

The hydroxamic derivative may be chemically converted to the pentafluoroethyl derivative by treatment with a pentafluoroethyl anion generated *in situ* by contacting pentafluoroethyl iodide with methyllithium-lithiumbromide complex in an inert solvent, preferably diethyl ether.

To prepare 3Z,5Y-substituted compounds of the sub-generic formula

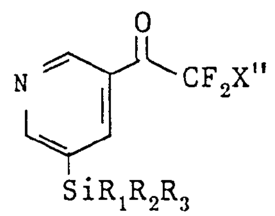

B-10

wherein $R_1$, $R_2$, $R_3$ and X″ are as defined in formula I, it is preferred to utilize the processes of the following reaction scheme.

Reaction Scheme B

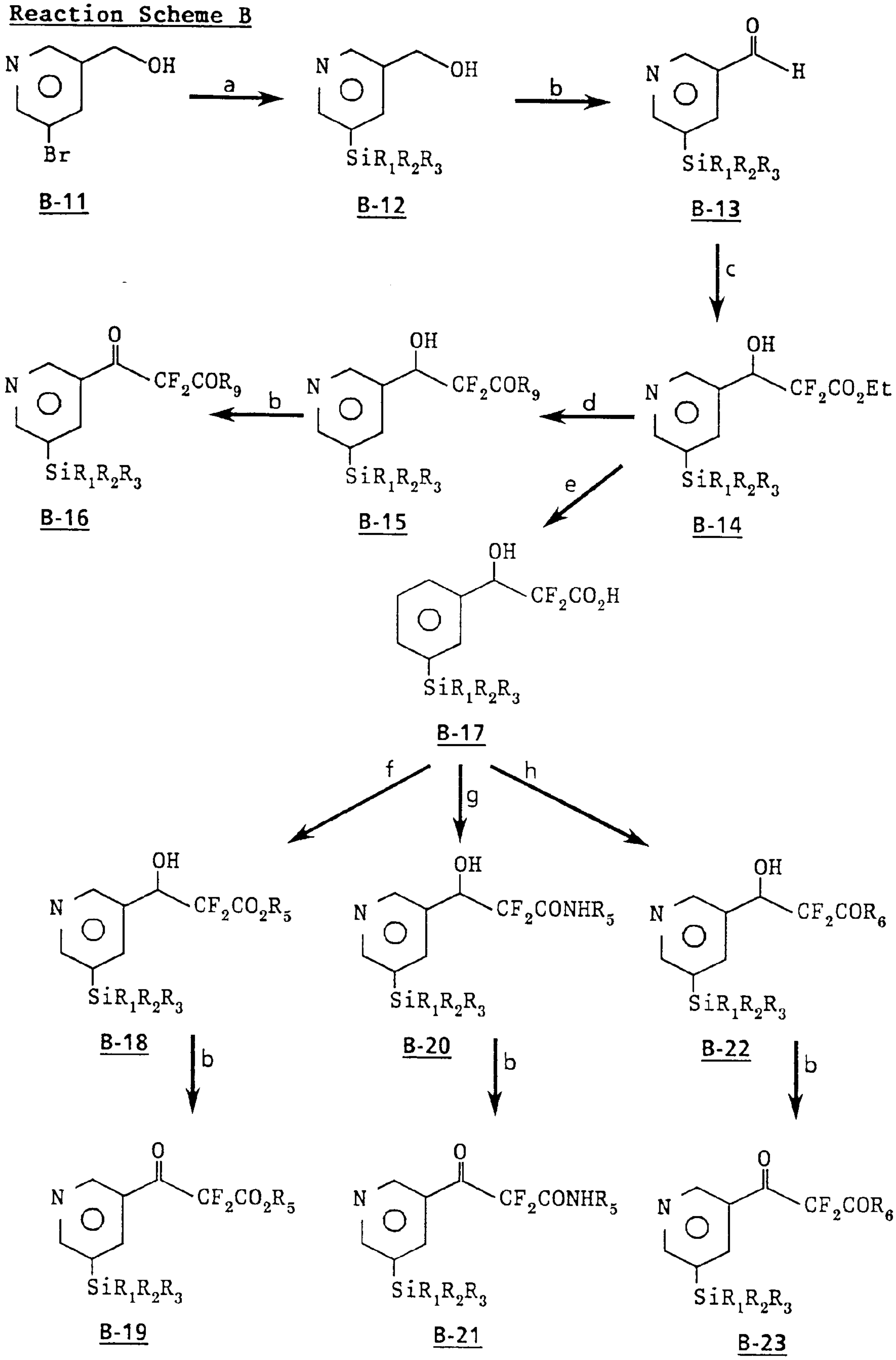


B-11 B-12 B-13 B-14 B-15 B-16 B-17 B-18 B-20 B-22 B-19 B-21 B-23

Step (B-a) involves the treatment of 3-bromopyridine alcohol (B-11) with 2 equivalents of butyl lithium in diethyl ether at 0°C, treat the resulting lithio derivatives with 2 equivalents of the desired $ClSiR_1R_2R_3$ and stir the resulting mixture at room temperature until the reaction is complete (generally 15-24 hours). Hydrolize, and after extraction, treat the crude product in 90% aqueous methanol for one hour at reflux temperature to obtain the silylated alcohols (B-12). Step (B-b) oxidizes the alcohols with pyridinium dichromate in dichloromethane to obtain the aldehydes (B-13) which, in Step (B-c), are treated with an alkyl bromo difluoroacetate in THF in the presence of zinc at reflux temperatures to obtain intermediary hydroxy di-fluoroesters (B-14). In Step (B-d) these esters (B-14) are treated with two equivalents of a metallo derivative, preferably a lithium or magnesium derivative of the $R_9$ moiety, in diethyl ether or THF to obtain compounds (B-15) which, as in Step (B-b) are oxidized to their corresponding ketones (B-16) using pyridinium dichromate or the Swern or Dess-Martin reactions. Alternatively, using Step (B-e) the hydroxy difluoro esters of formula (B-14) may be hydrolized by treatment with lithium hydroxide in 80% aqueous ethylene glycol dimethylether to obtain the corresponding hydroxy difluoro acids (B-17). These acids, using Step (B-f) may be treated with an alcohol ($R_5OH$) in the presence of dicyclohexyl carbodiimide and 4-dimethylamino pyridine to obtain the esters (3-18). Alternatively, using Step (B-g) the acids (B-17) may be treated with an amine ($R_5NH_2$) in the presence of dicyclohexylcarbodiimide and 1-hydroxybenzotriazole to obtain the amides of formula (B-20). Using Step (B-h) the hydroxy difluoro acids (B-17) may also be reacted with a natural occurring amino acid, or a peptide $R_6H$ in the dicyclohexylcarbodiimide and 1-hydroxybenzotriazole to obtain the products of formula (B-22). In each instance, using the oxidation step of (B-b), the alcohols of (B-15), (B-18), (B-20) and (B-22) may be oxidized to the corresponding ketones of formulae (B-16), (B-19), (B-21) and (B-23), respectively, or they may be esterified, as described above, with an acyl halide.

To prepare compounds of the sub-generic formula

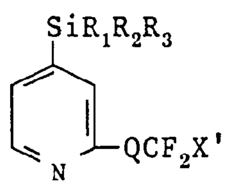

C-10

wherein $R_1$, $R_2$, $R_3$ and X′ are as defined in formula I, it is preferred to utilize the processes of the following reaction scheme.

Reaction Scheme C

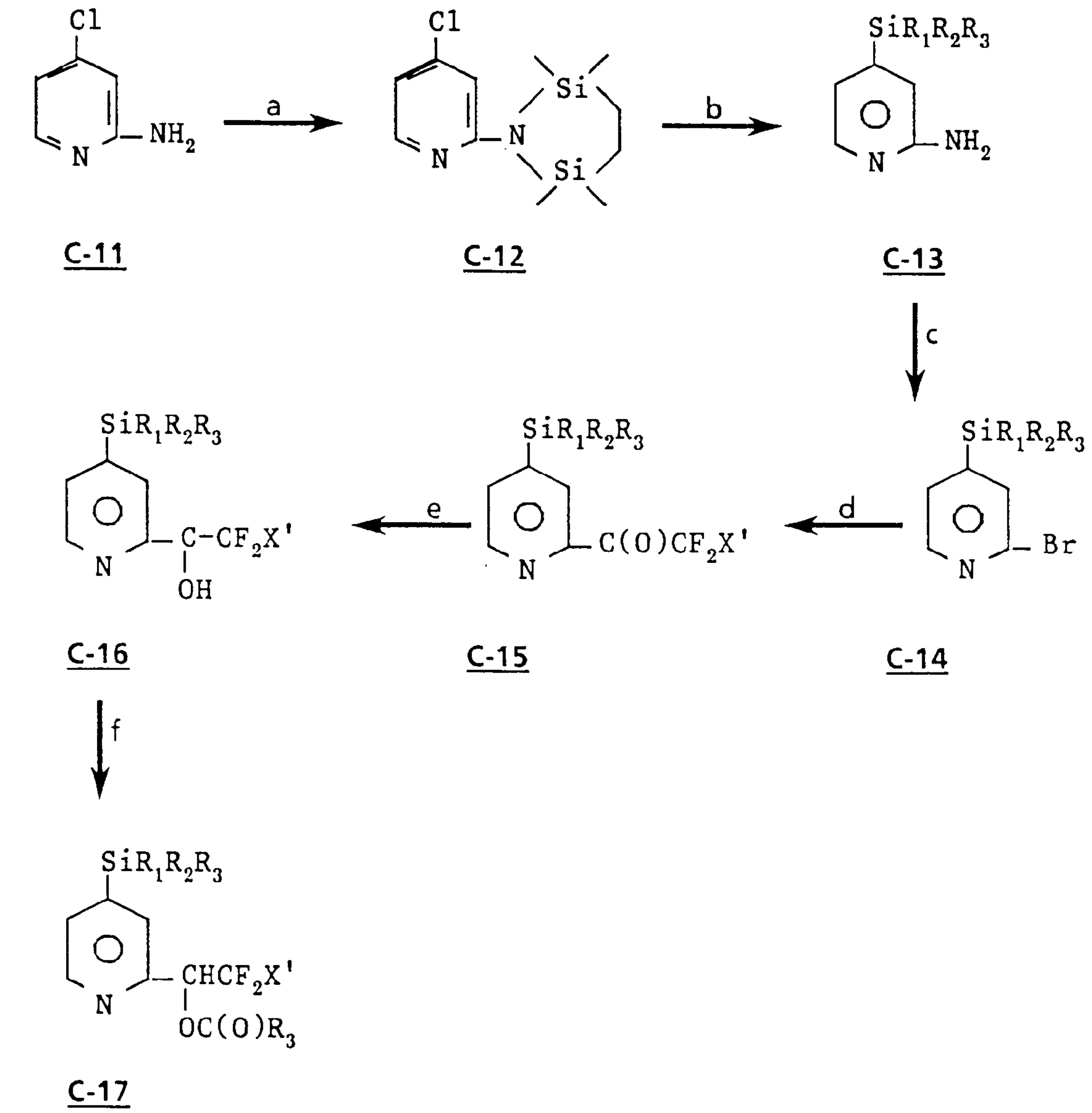


C-11 C-12 C-13

C-16 C-15 C-14

C-17

The preparation of the compounds C-11 is made according to the procedure described by Graf R., Chem. Ber. 64, 21 (1931). Step C-a involves the treatment of the amine (C-11) with one equivalent of butyllithium in tetrahydrofuran at about -30°C to form an *in situ* intermediate which is reacted with one equivalent of 1,4-dichloro-1,1,4,4-tetramethyl-disilylethylene at about -78°C. The so-produced stabase adducts (C-12) are silylated as in Step (A-a) except that the hydrolysis is performed preferably using 1N HCl to convert the stabase adduct to its amines in ammonium chloride salt which in turn is converted to the free amines (C-13) with sodium hydroxide. The amines (C-13), dissolved in 48% hydrobromic acid, are treated with sodium nitrite at 0°C, followed by treatment with sodium hydroxide to prepare the silylated bromopyridines (C-14). Utilizing these intermediates (C-14), the procedures of Steps A-b, A-c, A-d are carried out in an analogous fashion to produce compounds C-15, C-16 and C-17 respectively. The alternate synthesis for preparing the pentafluoroethyl analogs may similarly be utilized.

To prepare 2Z,5Y compounds of the sub-generic formula

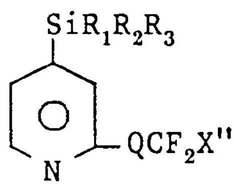

D-10

wherein $SiR_1R_2R_3$ and $QCF_2X''$ are as defined in Formula I, the processes of the following reaction scheme may be utilized.

Reaction Scheme D

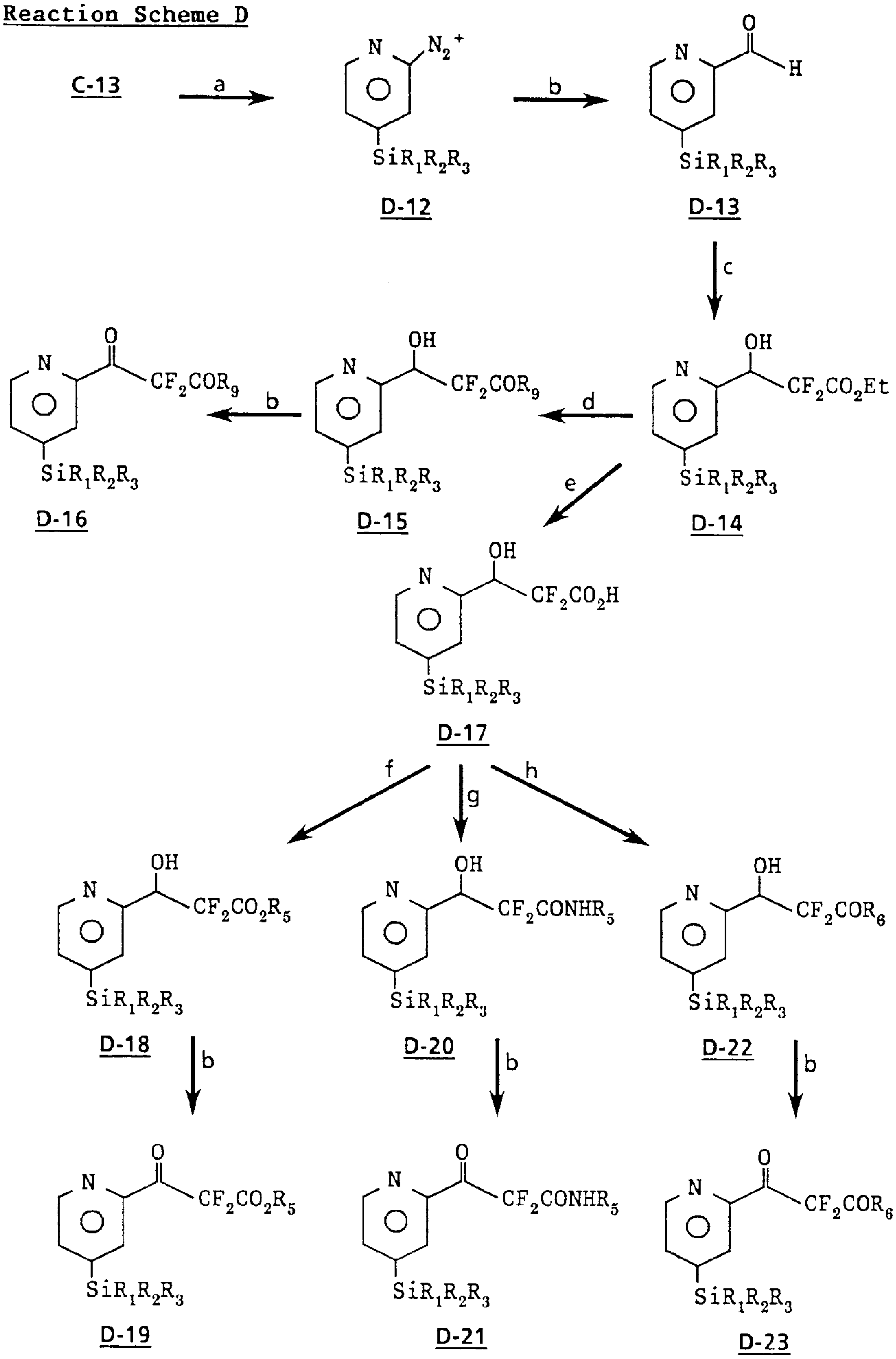


C-13

D-12

D-13

D-14

D-15

D-16

D-17

D-18

D-19

D-20

D-21

D-22

D-23

Step (D-a) entails the treatment of the amines of (C-13), in their hydrochloride salt form in water with sodium nitrite at 0°C followed by neutralization with sodium acetate. The resulting diazonium (D-12) derivatives are added to a solution of formaldoxime in the presence of cupric sulfate, sodium sulfite and sodium acetate to produce the aldehydes of (D-13). These aldehydes may be converted to the remaining depicted analogs of Reaction Scheme D (i.e., D-14 to D-23) using the analogous process steps which were described in Reaction Scheme B.

To prepare compounds of the formula

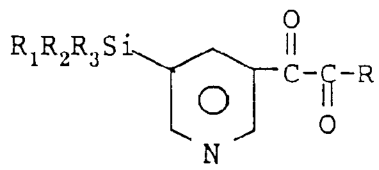

E-10

wherein $SiR_1R_2R_3$ and R are as previously defined in Formula I, the processes of the following reaction scheme may be utilized.

Reaction Scheme E

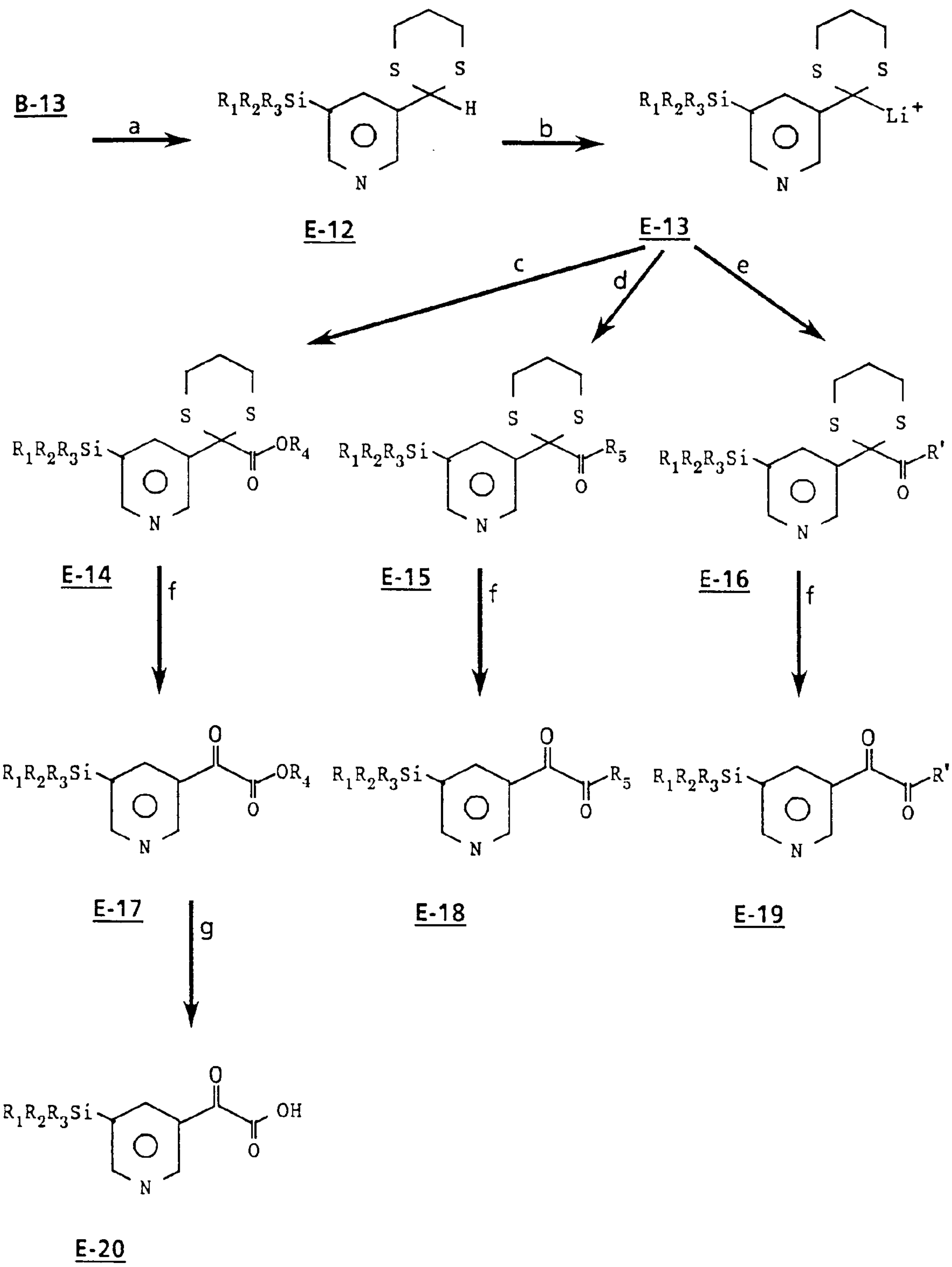


B-13

E-12

E-13

E-14

E-15

E-16

E-17

E-18

E-19

E-20

Step E-a entails the conversion of aldehydes B-13 to their 1,3-dithiane derivatives (E-12) according to the general procedure described by Corey, E., J. Org. Chem. 40, 231 (1975) which derivatives are converted to their lithium salts (E-13) by treatment with butyllithium in tetrahydrofuran at about -40°C to -20°C. The so-produced lithio salts (E-13) are subjected to alternate reaction pathways depending upon the desired end-products embraced within Formula (E-10). In Step E-c the lithium salts are treated with an appropriate alkyl, aryl or aralkyl

chloroformate (i.e., $R_4OC(O)Cl$) at -70°C to produce the 1,3-dithione esters of (E-14). In Step (E-d) the lithium salts are treated with an acyl chloride (i.e., $R_5C(O)Cl$) at -70°C to produce α-keto 1,3-dithiones of Formula (E-15). In Step (E-e) the lithium salts are treated with an ethyl trifluoroacetate (or ethyl pentafluoropropionate) at -70°C to produce the polyfluoroketo derivatives of (E-16). Step (E-f) hydrolyses the foregoing 1,3-dithione derivatives (E-14), (E-15) and (E-16) by treatment with N-bromosuccinimide in 80% aqueous acetonitrile or aqueous (about 5%) acetone at -5°C to 20°C, to produce the keto esters (E-17), diketones (E-18) and polyfluoroketones (E-19) respectively. Step (E-g) is utilized to hydrolyze the ketoesters (E-17) by treatment with lithium hydroxide in 80% aqueous ethylene glycol dimethyl ether to obtain the corresponding keto acids (E-20).

To produce the corresponding position isomers of the formula

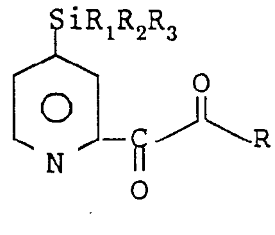

F-10

wherein R, $R_1$, $R_2$ and $R_3$ are as defined in Formula I, the aldehyde intermediates of Formula (D-13) are subjected to the processes of Reaction Scheme E using the analogous Process steps of (E-a) through (E-g) to obtain the position isomers corresponding to the products (E-12) through (E-20).

Having generically described the methods for the preparation of the compounds of this invention, the following specific examples illustrate the chemistry and techniques by which the synthesis may be effected.

## EXAMPLE 1

## 2,2,2-TRIFLUORO-1-(5-TRIMETHYLSILYL-3-PYRIDINYL)ETHANONE HYDROCHLORIDE

Step A: 3-Bromo-5-trimethylsilylpyridine

A solution of 3,5-dibromopyridine (7.11 g, 30 mmol) and trimethylsilylchloride (3.26 g, 30 mmol) in tetrahydrofuran (30 ml) was added dropwise on magnesium (0.73 g, 30 mmol) in refluxing tetrahydrofuran (30 ml). The mixture was then allowed to react 18 hours under reflux, cooled to 0°C and treated with ammonium chloride (4.82 g, 90 mmol) in water (90 ml). Tetrahydrofuran was evaporated under reduced pressure and the aqueous layer extracted with diethyl ether (100 ml). The organic layer was separated, washed with brine, dried over magnesium sulfate and concentrated. 3-bromo-5-trimethylsilylpyridine was purified by chromatography on silica gel (5% ethyl acetate in petroleum ether) as a colorless oil (1.58 g, 23% yield).

Step B: 2,2,2-Trifluoro-1-(5-trimethylsilyl-3-pyridinyl)ethanone hydrochloride

A solution of 3-bromo-5-trimethylsilylpyridine (0.35 g, 1.52 mmol) in diethyl ether (2 ml) was added on 1.5M butyllithium in hexane (1 ml, 1.5 mmol) in diethyl ether (2 ml) over 5 minutes at -30°C. Then the reaction was allowed to react 30 minutes at -30°C, cooled to -78°C and ethyl trifluoroacetate (0.65 g, 4.58 mmol) was added over 5 minutes. The cooling bath was then removed and when the temperature rose to 0°C, ammonium chloride (0.24 g, 4.5 mmol) in water (10 ml) was added. The organic layer was separated, washed with water, brine, dried over magnesium sulfate and concentrated under reduced pressure. Chromatography (silica gel, 10% ethyl acetate in petroleum ether) afforded 2,2,2-trifluoro-1-(5-trimethylsilyl-3-pyridinyl)ethanone which was dissolved in diethyl ether (5 ml) and treated with a saturated solution of hydrochloride in diethyl ether (2 ml). The resulting salt was filtered 24 hours later and dried *in vacuo*. Thus was obtained 2,2,2-trifluoro-1-(5-trimethylsilyl-3-pyridinyl)ethanone hydrochloride, hydrate (0.17 g, 35% yield). m.p. > 250°C.

| | |
|---|---|
| Anal. calc. for : | C%: 39.22; H%: 5.10; N%: 4.57; |
| Found : | C%: 39.16; H%: 5.06; N%: 4.57. |

## EXAMPLE 2

## ETHYL-2,2-DIFLUORO-3-HYDROXY-3-(5-TRIMETHYLSILYL-3-PYRIDINYL PROPIONATE HYDROCHLORIDE

Step A: 3-Hydroxymethyl-5-trimethylsilylpyridine

A solution of 5-trimethylsilyl-3-pyridine magnesium bromide, prepared from 3-bromo-5-trimethylsilylpyridine (2.30 g, 10 mmol), 1,2-dibromoethane (1.88 g, 10 mmol) and magnesium (0.48 g, 20 mmol) in tetrahydrofuran (40 ml), was added dropwise on paraformaldehyde (0.30 g, 10 mmol) in tetrahydrofuran (20 ml) at -10°C. The mixture was then allowed to react 3 hours at 0°C, treated with ammonium chloride (1.61 g, 30 mmol) in water (30 ml). Tetrahydrofuran was removed under reduced pressure and the crude product was extracted with diethyl ether (30 ml). The organic layer was separated, washed with brine, dried over magnesium sulfate and concentrated. Chromatography (silica gel, 20% ethyl acetate in petroleum ether) afforded the expected compound 3-hydroxymethyl-5-trimethylsilylpyridine as a colorless oil.

Step B: 5-Trimethylsilyl-3-pyridine carboxaldehyde

To a mixture of 3-hydroxymethyl-5-trimethylsilylpyridine (0.90 g, 5 mmol) and pyridinium dichromate (2.82 g, 7.5 mmol) in dichloromethane (15 ml) at 0°C was added 3Å molecular sieve powder (4 g) and anhydrous acetic acid (0.5 ml). The reaction was then allowed to react 30 minutes at room temperature, stirred 20 minutes with celite (5 g), filtered and evaporated under reduced pressure. The residue was treated with diethyl ether (30 ml), filtered through magnesium sulfate and concentrated. 5-Trimethylsilyl-3-pyridine carboxaldehyde was purified by chromatography on silica gel (5% ethyl acetate in petroleum ether).

Step C: Ethyl-2,2-difluoro-3-hydroxy-3-(5-trimethylsilyl-3-pyridinyl) propionate hydrochloride

A solution of 5-trimethylsilyl-3-pyridine carboxaldehyde (0.72 g, 4 mmol) and ethyl bromodifluoroacetate (0.91 g, 4.5 mmol) in tetrahydrofuran (5 ml) was added dropwise on zinc wool (0.33 g, 5 mmol) in refluxing tetrahydrofuran (5 ml). The reaction was then allowed to react 1 hour, cooled, hydrolyzed with ammonium chloride (0.54 g, 10 mmol) in water (10 ml). Tetrahydrofuran was removed under reduced pressure and the crude product was extracted with diethyl ether (20 ml). The organic layer was washed with brine, dried over magnesium sulfate and concentrated. Ethyl-2,2-difluoro-3-hydroxy-3-(5-trimethylsilyl-3-pyridine) propionate was purified by chromatography (40% ethyl acetate in petroleum ether), dissolved in diethyl ether (10 ml) and treated with a saturated solution of hydrochloride in diethyl ether (5 ml). The resulting salt was filtered and dried *in vacuo*.

## EXAMPLE 3

## 2,2,2-TRIFLUORO-1-(4-TRIMETHYLSILYL-2-PYRIDINYL) ETHANONE HYDROCHLORIDE

Step A: 2-[N,N-(1,1,4,4-Tetramethyl-1,4-disilethylene)]amino-4-chloropyridine

To a solution of 2-amino-4-chloropyridine [R. Graf, Chem. Ber. 64, 21-26 (1931)] (12.85 g, 100 mmol) in tetrahydrofuran (100 ml) at -30°C was added 1.5M butyllithium (66.67 ml). Then at -78°C was added a solution of 1,1,4,4-tetramethyl-1,4-dichlorosilethylene (21.50 g, 100 mmol) in tetrahydrofuran (100 ml) and the mixture was allowed to warm to room temperature and stirred for 1 hour. The mixture was then poured into water (200 ml), treated with 1N sodium hydroxide (100 ml) and extracted twice with diethyl ether (100 ml). The organic layers were separated, washed with brine, dried over magnesium sulfate and the solvents removed under reduced pressure. The title compound 2-[N,N-(1,1,4,4-tetramethyl-1,4-disilethylene)]-amino-4-chloropyridine was recrystallized from diethyl ether/hexane.

Step B: 2-Amino-4-trimethylsilylpyridine

The title compound was prepared as described in Step A of Example 1, except for hydrolysis which was made with 1N hydrochloride, followed by treatment with 1N sodium hydroxide. Purification was achieved by recrystallization from diethyl ether/hexane.

Step C: 2-Bromo-4-trimethylsilylpyridine

To a solution of 2-amino-4-trimethylsilylpyridine hydrobromide, prepared from 2-amino-4-trimethylsilylpyridine (3.32 g, 20 mmol) and 48% hydrobromide (10 ml, 88.6 mmol) at 0°C was added dropwise bromine (3.07 ml, 60 mmol) followed by sodium nitrite (3.45 g, 50 mmol) in water (5 ml) while the temperature was being maintained at 0°C. 30 minutes later sodium hydroxide (7.50 g, 187 mmol) in water (10 ml) was added dropwise to the mixture at 0°C. The reaction mixture was extracted twice with diethyl ether (50 ml). The extracts were washed with brine, dried over magnesium sulfate and diethyl ether removed under reduced pressure. The title compound was purified by chromatography on silica gel (5% ethyl acetate in petroleum ether) as a colorless oil.

Step D: 2,2,2-Trifluoro-1-(4-trimethylsilyl-2-pyridinyl) ethanone hydrochloride

The title compound was prepared as described in Step B of Example 1.

**EXAMPLE 4**

**ETHYL-2,2-DIFLUORO-3-HYDROXY-3-[2-(4-TRIMETHYLSILYLPYRIDINYL)] PROPIONATE HYDROCHLORIDE**

Step A: 4-Trimethylsilyl-2-pyridine carboxaldehyde

To a solution of 2-amino-4-trimethylsilyl hydrochloride prepared from 2-amino-4-trimethylsilyl (3.32 g, 20 mmol) and 37% hydrochloride (5 ml, 60.9 mmol) in water (5 ml) at 0°C was added dropwise sodium nitrite (1.38 g, 20 mmol) in water (5 ml). 15 minutes later sodium acetate (1.64 g, 20 mmol) in water (5 ml) was added. The resulting mixture was added dropwise to a solution of cupric sulfate (0.32 g, 2 mmol), sodium sulfite (0.08 g, 0.63 mmol), sodium acetate (8.2 g, 100 mmol) in water (15 ml) and 10% formaldoxime, prepared from paraformaldehyde (0.9 g, 30 mmol), hydroxylamine hydrochloride (2.08 g, 30 mmol)and sodium acetate(2.46 g, 30 mmol) in water (13.5 ml). The solution was maintained at 10°C during addition and stirred 1 hour before addition of 37% hydrochloride (18 ml). The mixture was then stirred under reflux for 2 hours, cooled and made neutral with sodium acetate. The resulting mixture was extracted twice with diethyl ether (50 ml). The organic layers were washed with brine, dried over magnesium sulfate and concentrated under reduced pressure. The expected compound 4-trimethylsilyl-2-pyridine carboxaldehyde was purified by chromatography on silica gel (5% ethyl acetate in petroleum ether).

Step B: Ethyl-2,2-difluoro-3-hydroxy-3-[2-(4-trimethylsilyl-pyridiryl)] propionate hydrochloride

The title compound was prepared as described in Step C of Example 2.

It is now established that Alzheimer's disease and other senile degenerative diseases are characterized by a selective loss in the cerebral cortex of choline acetyl-transferase, the enzyme responsible for the biosynthesis of acetylcholine. There also exists a good correlation between memory impairment or dementia and the decrement in cholinergic transmission. Thus, impaired cholinergic transmission in the central nervous system may be, at least in part, responsible for the symptomatology of Alzheimer's disease and senile dementia. In support to these conclusions such compounds as physostigmine and 1,2,3,4-tetrahydro-9-amino-acridine (THA), compounds which prevent the catabolism of acetylcholine have found a place in the treatment of Alzheimer's and other senile degenerative diseases. Indeed, it has been recognized that the extent of improvement of cognitive functions has been closely related to the degree of inhibition of acetylcholinesterase.

The compounds of Formula Iare pharmacologically active agents capable of inhibiting acetylcholinesterase as demonstrable in standard biological *in vitro* and *in vivo* test procedures. Indeed, based upon standard laboratory procedures, it is to be shown that the compounds of Formula Iare potent and selective, quasi irreversible inhibitors of acetylcholinesterase capable of demonstrating advantages over the prior art, particularly physostigmine, in their use in the treatment of Alzheimer's disease and senile dementia. The compounds, in general, will exert their acetylcholinesterase inhinitory properties within the dose range of about 0.1 mg to 10 mg per kilogram of body weight for the preferred compounds.

For Pharmacological end-use applications, the compounds of Formula I are preferentially administered in the form of their pharmaceutically acceptable acid addition salts. Of course, the effective dosage of the compounds will vary according to the individual potency of each compound employed, the severity and nature of the disease being treated and the particular subject being treated. In general, effective results can be achieved

by administering a compound at a dosage of about 0.01 mg to about 20 mg per kilogram of body weight per day, administered systemically. Therapy should be initiated at lower dosages. The dosage thereafter may be administered orally in solid dosage forms, e.g., capsules, tablets, or powders, or in liquid forms, e.g., solutions or suspensions. The compounds may also be injected parenterally in the form of sterile solutions or suspensions. Solid oral forms may contain conventional excipients, for instance: lactose, sucrose, magnesium stearate, resins, and like materials. Liquid oral forms may contain various flavoring, coloring, preserving, stabilizing, buffering, solubilizing, or suspending agents. If desired, additives, such as saline or glucose may be added to make the solutions isotonic.

As is true for most classes of compounds suitable for use as therapeutic agents, certain subgeneric groups and certain specific compounds are preferred. In this instance those compounds wherein $R_1$, $R_2$ and $R_3$ are all methyl or ethyl or mixtures thereof are preferred, and wherein one of $R_1$, $R_2$ and $R_3$ is a long-chain (8 to 10 carbon atoms) alkyl. Preferred compounds are those of X′, particularly when X′ is F and Q is -C(O). In general the 3Z,5Y-position isomers are preferred.

## Claims

1. A compound of the formulae

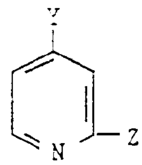
(1)

and

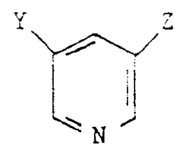
(2)

and the pharmaceutically acceptable salts thereof, wherein
Y is

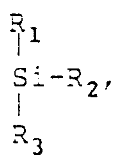

Z is

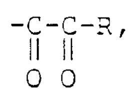

$-QCF_2X'$ or $-QCF_2X''$,
Q is

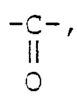 , 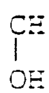 or 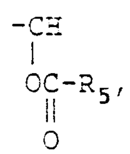

X′ is H, F, Br, Cl, $CF_3$ or $R_4$,
R is $R_5$, $OR_5$, or OR′ with R′ being $CF_3$ or $CF_2CF_3$,
X″ is

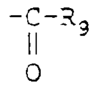 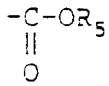 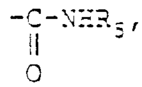 or 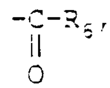

and each of $R_1$, $R_2$, $R_2$ and $R_4$ are $C_{1-10}$ alkyl, phenyl, benzyl or phenethyl,
$R_5$ is H, $C_{1-10}$ alkyl, phenyl, benzyl or phenethyl,
$R_6$ is

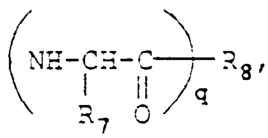

q is 1 to 4,
$R_7$ is the residue of any natural ocuring $\alpha$-amino acid,
$R_8$ is $OR_5$ or $NHR_5$,
$R_9$ is $C_{1-10}$ alkyl, phenyl, benzyl of phenethyl.

2. A compound of Claim 1 wherein Y is $Si(CH_3)_3$.

3. A compound of Claim 1 wherein Z is $CF_2X'$ with X′ being F, and Q is -C=O.

4. A compound of Claim 1 wherein Y is $Si(CH_3)_3$, Z is $QCF_2X'$ with $QCF_2X'$ being $-C(O)CF_3$.

5. A compound of Claim 1 having the formula

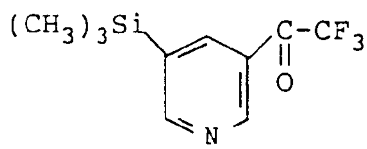

(3)

6. A compound of Claim 1 having the formula

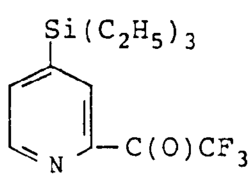

(4)

7. A process for preparin a 2Z,4Y- and a 3Z,5Y- disubstituted pyridine of the formulae

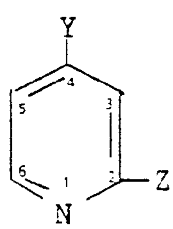

(5)

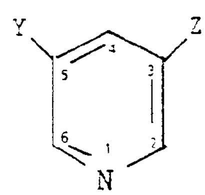

(6)

and the pharmaceutically acceptable salts thereof, wherein
Y is

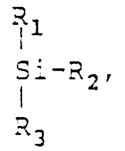

Z is

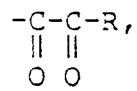

$-QCF_2X'$ or $-QCF_2X''$,
Q is

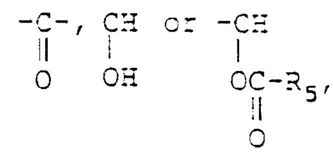

X′ is H, F, Br, Cl, $CF_3$ or $R_4$,
R is $R_5$ , $OR_5$, or OR′ with R′ being $CF_3$ or $CF_2CF_3$,
X″ is

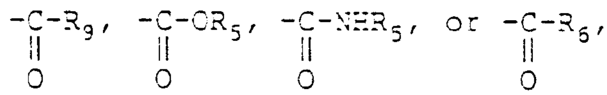

and each of $R_1$, $R_2$, $R_3$ and $R_4$ are $C_{1-10}$ alkyl, phenyl, benzyl or phenethyl,
$R_5$ is H, $C_{1-10}$ alkyl, phenyl, benzyl or phenethyl,
$R_6$ is

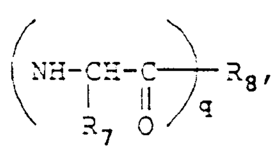

q is 1 to 4,
$R_7$ is the residue of any natural occuring α-amino acid,
$R_8$ is $OR_5$ or $NHR_5$,
$R_9$ is $C_{1-10}$ alkyl, phenyl, benzyl or phenethyl,
which comprises

(a) in the instance of preparing a 2-$QCF_2X'$, 4Y- and a 3-$QCF_2X'$, 5Y-disubstituted pyridine of the formula

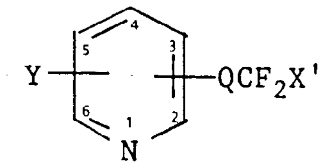

(7)

the use of the individual steps of the following depicted reactions

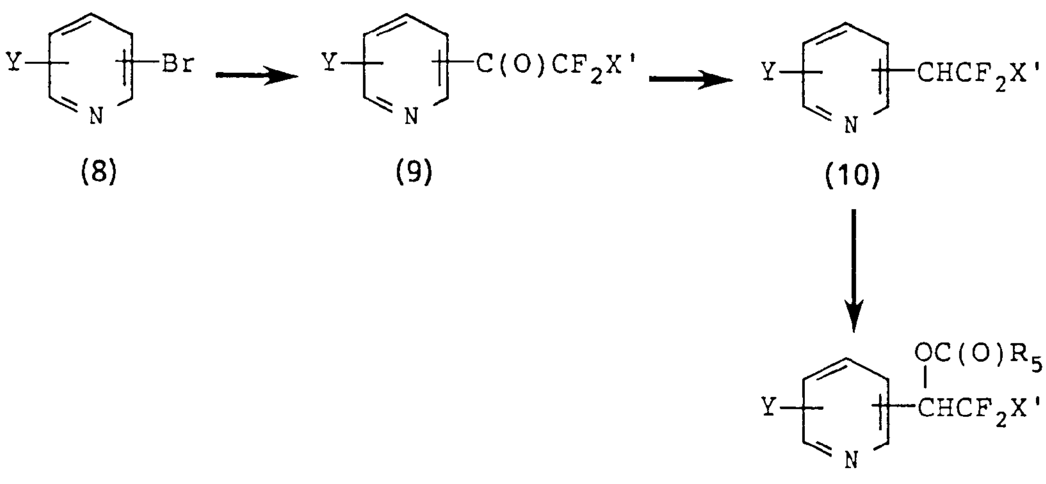

(8) (9) (10)

(11)

said steps entailing

(1) reacting a lithio derivative of compound **(8)** with 3 equivalents of an acid, ester or acid halide of the formulae $X'CF_2CO_2H$, $X'CF_2CO_2Et$ or $X'CF_2C(O)Cl$, respectively, Et being ethyl, to produce compound **(9)**,

(2) chemically reducing compounds **(9)** to produce compounds **(10)**,

(3) esterifying compounds **(10)** with an acyl halide of the formula $ClC(O)R_5$ to produce compounds **(11)**;

(b) in the instance of preparing a 2-$QCF_2X''$, 4Y- and a 3-$QCF_2X''$, 5Y-disubstituted pyridine of the formula

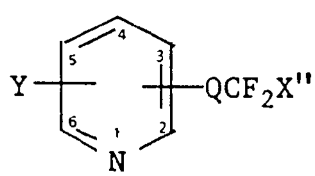

(12)

the use of the individual steps of the following reaction scheme

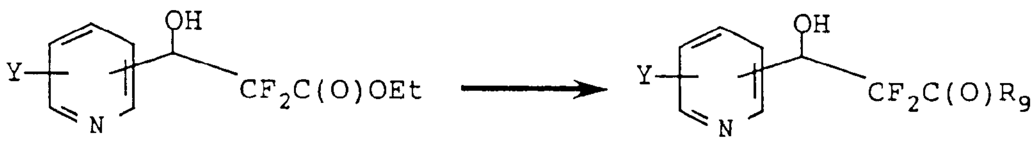

(13) (14)

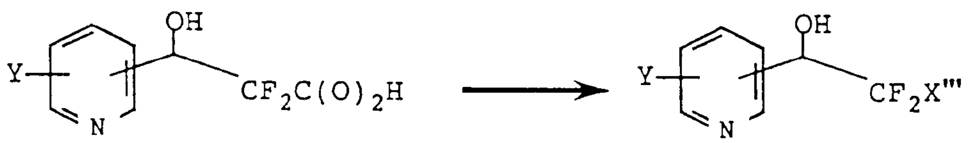

(15) (16)

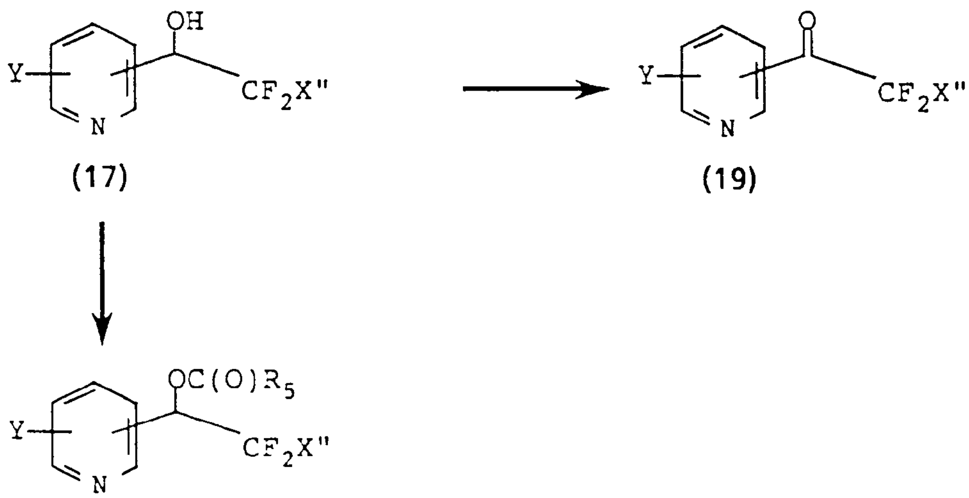

(18)

with X‴ being $-C(O)OR_5$, $-C(O)NHR_5$ or $-C(O)R_6$ and Et is ethyl,
said steps being

(1) reacting 2 equivalent of a metallo derivative of an $R_9$ moiety with a compound of formula **(13)** to produce compounds **(14)**,

(2) reacting a compound of formula **(15)** with an alcohol ($R_5OH$), an amine ($R_5NH_2$) or an α-amino and/or peptide of the formula

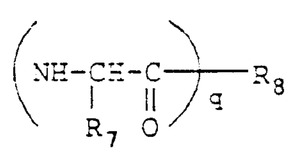

with q being 1 to 4 to produce a compound of Formula **(16)**,

(3) esterifying compounds **(17)** with an acyl halide of the formula $ClC(O)R_5$ to produce compounds **(18)**, ? oxidizing a compound of Formula **(17)** to their respective ketones **(19)** using pyridinium dichromate, or the Swern of Dess-Martin oxidation reactions,

(c) in the instance of preparating a

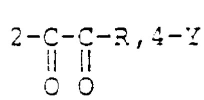

or a

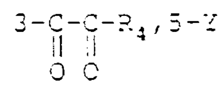

disubstituted pyridine of the formula

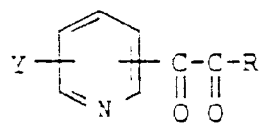

(20)

the use of the individual steps of the following depicted reactions

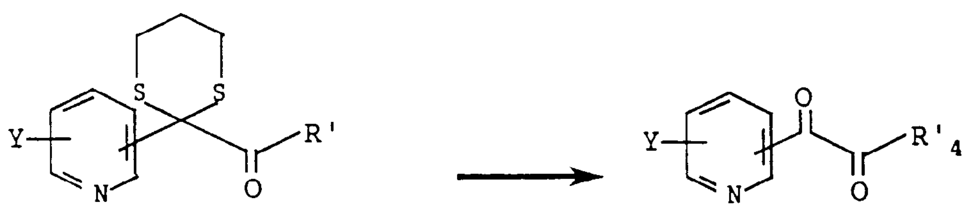

(21) (22)

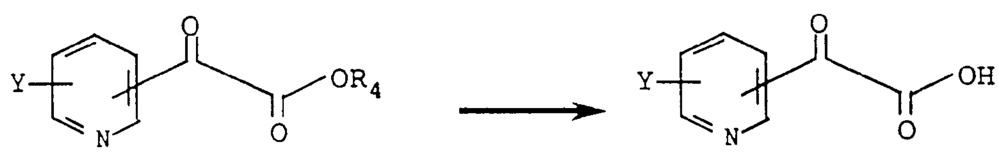

(23) (24)

wherein
R′ is $R_5$, $CF_3$, $CF_2CF_3$ or $OR'_5$ with $R'_5$ being $C_{1-10}$ alkyl, phenyl, benzyl or phenethyl,
said steps entailing

(1) hydrolysis of the dithione derivatives of formula **(21)** by reaction with N-bromosuccinimide to produce the keto esters, diketones and polyfluoroketones embraced by formula **(22)**,
and optionally forming the pharmaceutically accentable salts thereof.

**8.** The use of fluoroketone derivatives of silylated pyridines of formula (1) or (2) as a pharmaceutically active agent.

European Patent Office

# EUROPEAN SEARCH REPORT

Application Number

EP 91 40 3457

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-3 651 115 (BELSKY, I. ET AL)<br>* the whole document *<br>--- | 1 | C07F7/08<br>A61K31/695 |
| A | BIOCHEMISTRY<br>vol. 24, no. 8, 9 April 1985,<br>pages 1813 - 1817;<br>GELB, M.H. ET AL: 'FLUORO KETONE INHIBITORS OF HYDROLYTIC ENZYMES'<br>* the whole document *<br>----- | 1 | |
| | | | TECHNICAL FIELDS SEARCHED (Int. Cl.5 ) |
| | | | C07F<br>A61K |

The present search report has been drawn up for all claims

| Place of search | Date of completion of the search | Examiner |
|---|---|---|
| THE HAGUE | 09 MARCH 1992 | RINKEL L.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)